# EUROPEAN PATENT APPLICATION

(11) **EP 4 654 344 A1**
(43) Date of publication of application: **26.11.2025**
(21) Application number: 25176325.6
(22) Date of filing: 14.05.2025
(51) Int. Cl.: H01M 50/15, H01M 50/159, H01M 50/184, H01M 50/186, H01M 50/188, H01M 50/528, H01M 50/55, H01M 50/557, H01M 50/593

(54) **BATTERY CAP AND BATTERY**

(30) Priority: 24.05.2024 CN 202421157741 U
(71) Applicant: AESC Japan Ltd., Yokohama-Shi, Kanagawa 220-0012 (JP)
(72) Inventor: CHEN, Hu, Jiangyin City, Wuxi City, 214443 (CN)
(74) Representative: Becker, Eberhard

(57) **Abstract**

A battery cap and a battery are provided. At least a region of a first surface (110) of a cap plate (100) is provided with a first groove (130). At least a region of a third surface (210) of a lower insulating member (200) is provided with a first protrusion (230). The first protrusion is accommodated in the first groove. The portion of a fourth surface (220) corresponding to the first protrusion is provided with a second groove (240). In a first direction (X), a bottom portion of the second groove is higher than a lowest position of the cap plate. One end of the electrode terminal (320) facing away from a connecting plate (310) passes through the lower insulating member and the cap plate and extends to a second surface (120). The connecting plate arranged in the second groove abuts against a bottom wall of the second groove.

## Description

### BACKGROUND

### Technical Field

The disclosure relates to the technical field of batteries, and in particular, relates to a battery cap and a battery.

### Description of Related Art

In the society, with the continuous enhancement of awareness of energy conservation and environmental protection, new energy vehicles have been greatly developed. Electric vehicles are one of the many types of new energy vehicles and mainly use batteries to provide kinetic energy to drive the vehicles.

For electric vehicles, their driving range is directly related to the battery. The higher the energy density or capacity of the battery, the more electrical energy a single battery may provide, which is more conducive to improving the driving range of the electric vehicles.

However, in the related art, the volume of the cell that may be accommodated in the battery may be relatively small. As such, the capacity of the battery is decreased, and the electrical energy that may be provided by the battery is reduced.

### SUMMARY

The embodiments of the disclosure provide a battery cap and a battery used to solve the technical problem in the related art where a volume of a cell that may be accommodated in the battery is relatively small, causing a decrease in battery capacity and electrical energy that may be provided by the battery.

To achieve the above, the embodiments of the disclosure provide the following technical solutions.

In the first aspect, an embodiment of the disclosure provides a battery cap including a cap plate, a lower insulating member, and an electrode lead-out member.

The cap plate includes a first surface and a second surface opposite to each other in a thickness direction, and at least a partial region of the first surface is provided with a first groove.

The lower insulating member includes a third surface and a fourth surface relatively arranged in the thickness direction. At least a partial region of the third surface is provided with a first protrusion, the third surface is a side of the lower insulating member close to the first surface, and the first protrusion is accommodated in the first groove.

A portion of the fourth surface corresponding to the first protrusion is provided with a second groove.

In a first direction, a bottom portion of the second groove is higher than a lowest position of the cap plate, and the first direction is the direction from the fourth surface towards the third surface.

The electrode lead-out member includes a connecting plate and an electrode terminal connected to each other. One end of the electrode terminal facing away from the connecting plate passes through the lower insulating member and the cap plate and extends to the second surface. The connecting plate is arranged in the second groove and abuts against a bottom wall of the second groove.

In an embodiment, a protrusion height of the first protrusion is less than or equal to a recessed depth of the first groove.

In an embodiment, a thickness of the lower insulating member at the first protrusion is less than or equal to the depth of the first groove.

In an embodiment, a thickness of the first protrusion is less than the depth of the first groove, and one side of the first protrusion close to the first surface abuts against a bottom portion of the first groove.

In an embodiment, a portion of the second surface corresponding to the first groove is provided with a second protrusion.

A thickness of the second protrusion is equal to a thickness of the cap plate.

In an embodiment, in the thickness direction of the cap plate, a distance from an outer surface of the second protrusion to the second surface is a first distance.

A ratio of the first distance to the thickness of the cap plate is greater than or equal to 0.1 and less than or equal to 0.8.

In an embodiment, the second protrusion includes a protruding portion and a transition portion.

One end of the transition portion is connected to the second surface of the cap plate, and the other end of the transition portion is connected to the protruding portion.

The transition portion is inclined towards the protruding portion relative to the second surface.

In an embodiment, the transition portion has a fifth surface and a sixth surface opposite to each other.

In a direction perpendicular to an inclined direction of the transition portion, a shortest distance from the fifth surface to the sixth surface is a second distance.

A ratio of the second distance to the thickness of the cap plate is greater than or equal to 0.3 and less than or equal to 0.9.

In an embodiment, an accommodating region is provided between the connecting plate and an opening of the second groove. The accommodating region is configured to accommodate a folded tab on a cell. A depth of the accommodating region in the first direction is at least twice a thickness of the folded tab.

In an embodiment, the lower insulating member includes a first structure and a second structure.

The first structure is the first protrusion.

The second structure is connected to an outer edge of the first protrusion, and the second structure and the first structure form the second groove.

A wall surface of the first structure facing the connecting plate is the bottom wall of the second groove.

In an embodiment, a maximum thickness of the second structure in the first direction is a third distance, and the third distance is greater than or equal to 2 mm and less than or equal to 5 mm.

In an embodiment, in the first direction, a thickness of the first structure is less than the depth of the first groove, so that at least a portion of the connecting plate is located in the first groove.

In an embodiment, a first gap is provided between one end of the first structure facing away from the connecting plate and a side wall of the first groove.

In an embodiment, a second gap is provided between the connecting plate and a side wall of the second groove.

In the second aspect, the embodiments of the disclosure further provide a battery including a cell and the battery cap as described above.

The embodiments of the disclosure provide a battery cap and a battery. In the battery cap, through the arrangement of the first groove on the first surface of the cap plate and the first protrusion on the lower insulating member in the first groove, when the cap plate covers the casing of the battery, occupation of the lower insulating member in the internal space of the casing is lowered. As such, the height of the cell that may be accommodated in the casing is correspondingly increased while ensuring that the volume of the casing of the battery remains unchanged, the volume of the cell and the capacity of the battery are increased, and the electrical energy that the battery may provide is raised.

Further, a portion of the fourth surface of the lower insulating member corresponding to the first protrusion is provided with the second groove. The connecting plate of the electrode lead-out member is arranged in the second groove and abuts against the inner wall of the second groove. One end of the electrode terminal facing away from the connecting plate passes through the lower insulating member and the cap plate and extends to the second surface. Further, in the first surface, the second groove is configured to accommodate the folded tab on the cell connected to the connecting plate. In this way, occupation of the tab in the inner space of the casing of the battery is further reduced. As such, the height of the cell that may be accommodated in the casing is further increased while ensuring that the volume of the casing of the battery remains unchanged, the volume of the cell and the capacity of the battery are further increased, and the electrical energy that the battery may provide is raised.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are some embodiments of the disclosure, and for a person having ordinary skill in the art, other drawings may be obtained based on these drawings without an inventive effort.
FIG. 1 is an exploded view of a battery cap provided by an embodiment of the disclosure.
FIG. 2 is a structural schematic view of the battery cap from another angle provided by an embodiment of the disclosure.
FIG. 3 is a cross-sectional view of the battery cap at A-A in FIG. 2.
FIG. 4 is a partial schematic view of FIG. 3.

### DESCRIPTION OF THE EMBODIMENTS

As described in the BACKGROUND section, in the related art, a volume of a cell that may be accommodated in a battery is relatively small. As such, a capacity of the battery is decreased, and electrical energy that may be provided by the battery is reduced.

The reason for this problem lies in that, in an assembly process of a battery in the related art, a lower insulating member may be installed inside a casing of the battery. In a situation where a height of the casing remains unchanged, the more the lower insulating member extends into the casing in a height direction, the more space it occupies in the height direction inside the casing. Correspondingly, a height of a cell that may be accommodated inside the casing becomes lower, so that a volume of the cell that may be accommodated in the casing of the battery is affected, which in turn causes a decrease in the capacity of the battery and reduces the electrical energy that the battery may provide.

In response to the above technical problem, an embodiment of the disclosure provides a battery cap and a battery. In the battery cap, through the arrangement of a first groove on a first surface of a cap plate and a first protrusion on a lower insulating member in the first groove, when the cap plate covers the casing of the battery, occupation of the lower insulating member in an internal space of the casing is lowered. Through this arrangement, a height of a cell that the casing may accommodate may accordingly increase while ensuring that a volume of the casing of the battery remains unchanged. In this way, a volume of the cell and a capacity of the battery may be increased, so electrical energy that may be provided by the battery is raised.

Further, a portion of a fourth surface of the lower insulating member corresponding to the first protrusion is provided with a second groove. A connecting plate of an electrode lead-out member is arranged in the second groove and abuts against an inner wall of the second groove. One end of an electrode terminal facing away from the connecting plate passes through the lower insulating member and the cap plate and extends to a second surface. Further, in a first surface, the second groove may also be configured to accommodate a folded tab on the cell connected to the connecting plate. In this way, occupation of the tab in the internal space of the casing of the battery may be further reduced. As such, the height of the cell that can be accommodated in the casing is further increased while ensuring that the volume of the casing of the battery remains unchanged, the volume of the cell and the capacity of the battery are further increased, and the electrical energy that the battery may provide is raised.

In order to make the above-mentioned purposes, features, and advantages of the embodiments of the disclosure more apparent and understandable, the technical solutions in the embodiments of the disclosure are to be described clearly and completely in together with the accompanying drawings of the embodiments of disclosure. Obviously, the described embodiments are only a part of the embodiments of the disclosure, not all of the embodiments. Based on the embodiments in the disclosure, all other embodiments obtained by a person having ordinary skill in the art without creative labor are within the scope of protection of the disclosure.

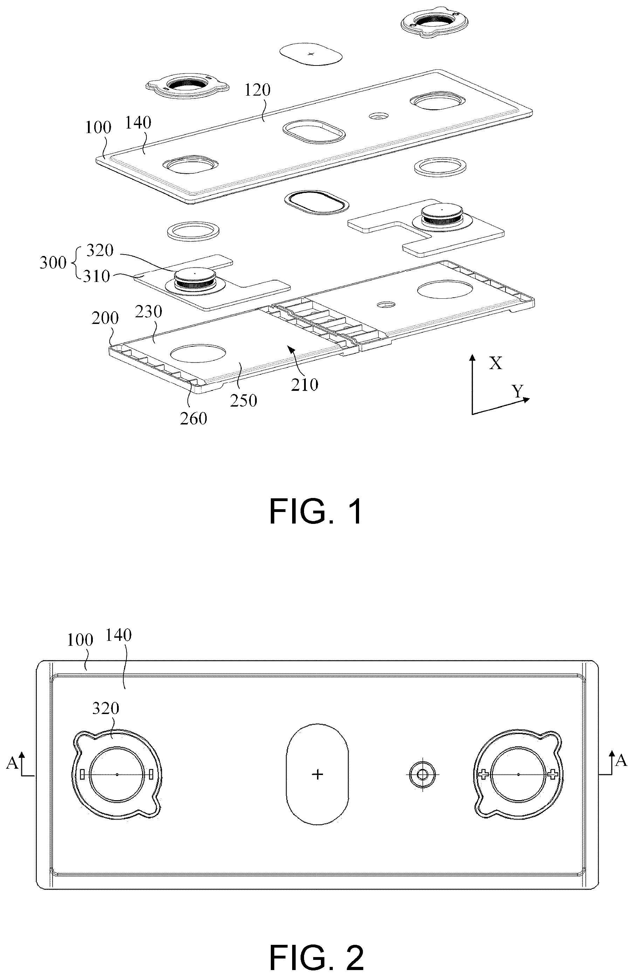

With reference to FIG. 1, an embodiment of the disclosure provides a battery cap, which may include a cap plate 100, a lower insulating member 200, and an electrode lead-out member 300. The cap plate 100 may be a metal plate, and the connecting plate 310 may also be a metal plate. The battery cap plate 100 is configured to be connected to a casing of a battery in order to seal a cell within the casing.

The cell is arranged in the casing and includes a cell body, an outer separator, and a tab. The outer separator is fitted around an outer periphery of the cell body. The tab is arranged at one end of the cell body in a height direction facing an opening of the casing, and the tab is in a folded state. During a battery assembly process, the tab is configured to be connected to the electrode lead-out member 300.

With reference to FIG. 1 and FIG. 2, the electrode lead-out member 300 may be a positive electrode lead-out member 300, and the electrode lead-out member 300 may also be a negative electrode lead-out member 300. The battery cap may have both a positive electrode lead-out member 300 and a negative electrode lead-out member 300.

The electrode lead-out member 300 may include a connecting plate 310 and an electrode terminal 320. The connecting plate 310 and the electrode terminal 320 may be an integrally formed structure or may be connected through a welding method. The connecting plate 310 is configured to be electrically connected to the tab on the cell body.

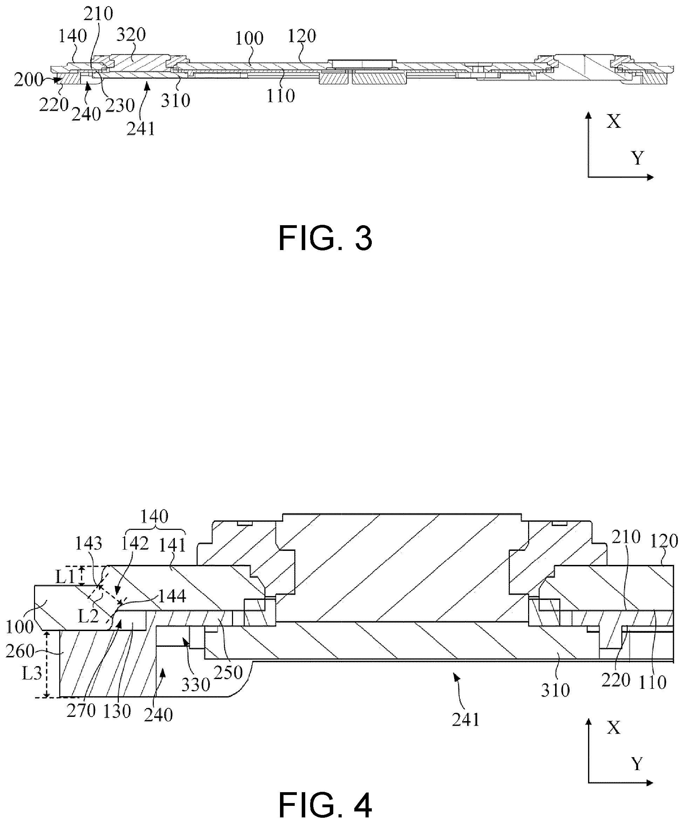

With reference to FIG. 1 and FIG. 3, the cap plate 100 may include a first surface 110 and a second surface 120 that are opposite to each other in a thickness direction.

When being connected to the casing, the first surface 110 faces an inner portion of the casing, and the second surface 120 faces an outer portion of the casing. The first surface 110 of the cap plate 100 has a first groove 130, with a groove opening of the first groove 130 formed in the thickness direction. When the cap plate 100 covers the casing, the groove opening of the first groove 130 may face the inner portion of the casing.

With reference to FIG. 3, the lower insulating member 200 includes a third surface 210 and a fourth surface 220 relatively arranged in the thickness direction. At least a partial region of the third surface 210 is provided with a first protrusion 230, and the third surface 210 is a side of the lower insulating member 200 close to the first surface 110. The first protrusion 230 is accommodated in the first groove 130. It may be understood that the first protrusion 230 may be connected to a bottom wall of the first groove 130, where the connection herein may be abutting, adhesive bonding, or connecting through a connecting member.

In this way, in the battery cap, through the arrangement of the first groove 130 on the first surface 110 of the cap plate 100 and the first protrusion 230 on the lower insulating member 200 in the first groove 130, when the cap plate 100 covers the casing of the battery, occupation of the lower insulating member 200 in the inner portion of the casing is lowered. As such, the height of the cell that may be accommodated in the casing is correspondingly increased while ensuring that the volume of the casing of the battery remains unchanged, the volume of the cell and the capacity of the battery are increased, and the electrical energy that the battery may provide is raised.

With reference to FIG. 3 and FIG. 4, a portion of the fourth surface 220 of the lower insulating member 200 corresponding to the first protrusion 230 is provided with a second groove 240. In a first direction (as shown by an arrow X in FIG. 3), a bottom portion of the second groove 240 is higher than a lowest position of the cap plate 100, and the first direction is the direction from the fourth surface 220 towards the third surface 210. One end of the electrode terminal 320 facing away from the connecting plate 310 passes through the lower insulating member 200 and the cap plate 100 and extends to the second surface 120. The connecting plate 310 is arranged in the second groove 240 and abuts against a bottom wall of the second groove 240.

In this way, through arrangement of the bottom wall of the second groove 240 in the lower insulating member 200 to physically isolate the connecting plate 310 and the cap plate 100, electrical connection between the connecting plate 310 and the cap plate 100 may be avoided, so insulation and isolation between the connecting plate 310 and the cap plate 100 are implemented.

Furthermore, in the first direction, by making the bottom portion of the second groove 240 higher than the lowest position of the cap plate 100, a portion of the connecting plate 310 may be positioned within the first groove 130 in the thickness direction, allowing at least a portion of the connecting plate 310 to be located within the cap plate 100. In this way, occupation of the inner portion of the casing by the connecting plate 310 may be reduced, and the volume of the cell that may be accommodated in the casing is increased while the volume of the casing remains unchanged, so the capacity of a single battery is raised.

With reference to FIG. 3 and FIG. 4, in some embodiments, a thickness of the lower insulating member 200 at the first protrusion 230 is less than or equal to a depth of the first groove 130.

With reference to FIG. 3 and FIG. 4, in some embodiments, a thickness of the first protrusion 230 is less than the depth of the first groove 130, and one side of the first protrusion 230 close to the first surface 110 abuts against a bottom portion of the first groove 130, so that at least a portion of the connecting plate 310 is located within the first groove 130.

It may be understood that, in the first direction, while the first protrusion 230 is located within the first groove 130, at least a portion of the connecting plate 310 may also be located within the first groove 130.

For instance, in the thickness direction of the cap plate 100, a sum of the thickness of the first protrusion 230 and a thickness of the partial connecting plate 310 is equal to the depth of the first groove 130.

In this way, while a portion of the lower insulating member 200 is located within the first groove 130, further arranging at least a portion of the connecting plate 310 within the first groove 130 may further distance the connecting plate 310 from the inner portion of the casing.

In some embodiments, the connecting plate 310 may be configured to be electrically connected to the folded tab on the cell.

Therefore, if the thickness of the connecting plate 310 is less than a depth of the second groove 240, the tab electrically connected to the connecting plate 310 may also be at least partially or fully accommodated in the second groove 240. By accommodating the tab in the second groove 240, occupation of the inner portion of the casing by the tab may be decreased. As such, the capacity of the cell in the casing may be increased, and the capacity of the battery is also increased while the volume of the casing remains unchanged.

With reference to FIG. 3 and FIG. 4, in some embodiments, in the first direction, an accommodating region 241 is provided between the connecting plate 310 and a groove opening of the second groove 240. An opening of the accommodating region 241 may be an opening of the second groove 240, and the accommodating region 241 may be configured to accommodate the folded tab. When the battery cap is arranged on the casing, the opening of the accommodating region 241 faces the inner portion of the casing and may be configured to accommodate the tab on the cell.

It may be understood that the accommodating region 241 may at least accommodate a portion of the folded tab in the first direction, for example, the accommodating region 241 may accommodate the entire folded tab in the first direction, so that the occupation of the internal space of the casing by the tab is reduced. The volume of the cell that may be accommodated in the internal space of the casing is increased while the internal space of the casing remains unchanged, and the capacity of the battery is thereby raised.

In specific implementation, a depth of the accommodating region 241 in the first direction is at least twice a thickness of the folded tab.

It may be understood that if the depth of the accommodating region 241 in the first direction may be twice the thickness of the folded tab, the tab of the cell may be fully accommodated within the accommodating region 241 and is prevented from occupying the internal space of the casing. As such, the casing is allowed to accommodate a cell with a larger size without changing the height of the casing, so the capacity of the battery is increased, and the electrical energy that the battery may provide is raised.

With reference to FIG. 3 and FIG. 4, in some embodiments, a portion of the second surface 120 corresponding to the first groove 130 is provided with a second protrusion 140, and a thickness of the second protrusion 140 is equal to a thickness of the cap plate 100.

In this way, by making the thickness of the second protrusion 140 equal to the thickness of the cap plate 100, it may be ensured that the thickness of the cap plate 100 remains almost unchanged. Strength of the cap plate 100 in a region where the first groove 130 is located thus prevented from being decreased due to thickness reduction, and the overall strength of the battery cap is thereby improved.

With reference to FIG. 3 and FIG. 4, in some embodiments, the first groove 130 may be formed by stamping the cap plate 100, where a stamped groove formed on the stamped first surface 110 of the cap plate 100 is the first groove 130, and a corresponding stamped protrusion is provided on the second surface 120. In the first direction, a distance from a surface of the stamped groove to a surface of the stamped protrusion is equal to the thickness of the cap plate 100.

In this way, by forming the first groove 130 through stamping, the thickness of the stamped region on the cap plate 100 may be approximately equal to the thickness of the unstamped region on the cap plate 100, it is thus ensured that the thickness of the cap plate 100 remains almost unchanged. Compared to the method of forming the first groove 130 on the first surface 110 of the cap plate 100 by thinning, in this approach, the strength of the cap plate 100 in the region where the first groove 130 is located is prevented from being decreased due to thickness reduction, and the overall strength of the battery cap is thereby improved.

With reference to FIG. 3 and FIG. 4, in some embodiments, in the first direction, in the thickness direction of the cap plate 100, a distance from an outer surface of the second protrusion 140 to the second surface 120 is a first distance (as shown by the distance L1 in FIG. 4). A ratio of the first distance to the thickness of the cap plate 100 is greater than or equal to 0.1 and less than or equal to 0.8.

In some embodiments, if the thickness of the cap plate 100 is 2 mm, the first distance may be 0.2 mm, 0.4 mm, 1.1 mm, or 1.6 mm.

In this way, by setting the ratio of the first distance to the thickness of the cap plate 100 to be less than or equal to 0.8, it may avoid the difficulty in manufacturing the first groove 130 due to an excessively large ratio. Further, a thickness at a connection between the first groove 130 and the cap plate 100 is also prevented from being excessively thin, which may reduce the strength of the cap plate 100, due to the excessive depth of the first groove 130.

Further, if the first groove 130 is the stamped groove, by setting the ratio of the first distance to the thickness of the cap plate 100 to be greater than or equal to 0.1, it may avoid a situation where the ratio is excessively small, which may cause the depth of the first groove 130 to be insufficient to accommodate the lower insulating member 200 due to the fluidity of the metal, and the space occupied by the lower insulating member 200 in the casing is thereby decreased.

With reference to FIG. 3 and FIG. 4, in some embodiments, the second protrusion 140 may include a protruding portion 141 and a transition portion 142.

One end of the transition portion 142 is connected to the second surface 120 of the cap plate 100, and the other end of the transition portion 142 is connected to the protruding portion 141. The transition portion 142 may be configured to connect the cap plate 100 with a top portion of the second protrusion 140. The transition portion 142 is arranged at an incline towards the protruding portion 141 relative to the second surface 120.

In this way, if the first groove 130 is the stamped groove and the second protrusion 140 is a stamped protrusion, compared with the arrangement approach where the transition portion 142 is perpendicular to the second surface 120, stamping precision may be reduced, and the processing efficiency of the stamped groove may be improved.

With reference to FIG. 3 and FIG. 4, in some embodiments, the transition portion 142 has a fifth surface 143 and a sixth surface 144 opposite to each other.

In a direction vertical to an inclined direction of the transition portion 142, a shortest distance from the fifth surface 143 to the sixth surface 144 is a second distance (as shown by the distance L2 in FIG. 4), and a ratio of the second distance to the thickness of the cap plate 100 is greater than or equal to 0.3 and less than or equal to 0.9.

In some embodiments, if the thickness of the cap plate 100 is 2 mm, the second distance may be 0.6 mm, 0.8 mm, 1.1 mm, 1.6 mm, or 1.8 mm.

In this way, by making the ratio of the second distance to the thickness of the cap plate 100 greater than or equal to 0.3, the problem of the transition portion 142 being excessively thin due to the second distance being excessively small is avoided. As such, the problem of fracture occurring in the transition portion 142 due to its excessive thinness is avoided, and structural stability is thereby improved.

Further, by making the ratio of the second distance to the thickness of the cap plate 100 less than or equal to 0.9, the problem that the transition portion 142 may not be formed due to the fluidity of the metal when the second distance is excessively large is avoided.

With reference to FIG. 3 and FIG. 4, in some embodiments, a protrusion height of the first protrusion 230 is less than or equal to a recessed depth of the first groove 130.

In this way, by making the height of the first protrusion 230 less than or equal to the recessed depth of the first groove 130, the first protrusion 230 may be completely accommodated within the first groove 130, so a gap between the third surface 210 of the lower insulating member 200 and the first surface 110 of the cap plate 100 is prevented from being formed. As such, connection stability between the lower insulating member 200 and the cap plate 100 is improved, and the space occupied by the lower insulating member 200 in the casing is decreased.

With reference to FIG. 3 and FIG. 4, in some embodiments, the lower insulating member 200 may include a first structure 250 and a second structure 260.

The first structure 250 is located within the first groove 130 and is positioned between the connecting plate 310 and the bottom wall of the first groove 130. The first structure 250 is configured to electrically insulate the connecting plate 310 from the cap plate 100 and may be the first protrusion 230.

The second structure 260 may be connected to an outer edge of the first protrusion 230, so that the second structure 260 and the first structure 250 form the second groove 240. A wall surface of the first structure 250 facing the connecting plate 310 is the bottom wall of the second groove 240, and a wall surface of the second structure 260 facing the connecting plate 310 may be part of a side wall of the second groove 240.

In this way, by positioning the first structure 250 of the lower insulating member 200 within the first groove 130, part of the structure of the lower insulating member 200 may be arranged inside the cap plate 100, so that the space occupied by the overall structure of the lower insulating member 200 in the inner portion of the casing is reduced. As such, without changing the height of the casing, the casing may accommodate a cell with a larger size, and the capacity of the battery is thereby increased.

With reference to FIG. 3 and FIG. 4, in some embodiments, a maximum thickness of the second structure 260 in the first direction is a third distance (as shown by the distance L3 in FIG. 4), and the third distance is greater than or equal to 2 mm and less than or equal to 5 mm.

In some embodiments, the third distance may be 2 mm, 3 mm, 4 mm, or 4.5 mm.

In this way, by making the third distance greater than or equal to 2 mm, the connection stability with an outer separator prevented from being affected due to the thickness of the second structure 260 being excessively small. By making the third distance less than or equal to 5 mm, the second structure 260 is prevented from occupying the space of the inner portion of the casing, so the casing is allowed to accommodate a cell with a larger size, and the capacity of the battery is thereby increased

With reference to FIG. 3 and FIG. 4, in some embodiments, a first gap 270 is provided between one end of the first structure 250 facing away from the connecting plate 310 and a side wall of the first groove 130.

In this way, by arranging the first gap 270 between one end of the first structure 250 facing away from the connecting plate 310 and the side wall of the first groove 130, the first structure 250 of the lower insulating member 200 may be easily mounted into the first groove 130. The assembly efficiency of the lower insulating member 200 and the cap plate 100 is improved, and the assembly efficiency of the battery cap is thereby enhanced.

With reference to FIG. 3 and FIG. 4, in some embodiments, a second gap 330 is provided between the connecting plate 310 and the side wall of the second groove 240.

In this way, by arranging the second gap 330 between the connecting plate 310 and the side wall of the second groove 240, the connecting plate 310 may be easily mounted into the second groove 240. The assembly efficiency of mounting the connecting plate 310 into the second groove 240 is improved, and the assembly efficiency of the battery cap is thereby enhanced.

The embodiments of the disclosure further provide a battery, which may include a cell and the battery cap as described above.

In this way, by using the abovementioned battery cap, the space occupied by the lower insulating member 200 in the casing and the space occupied by the tab on the cell in the casing may be reduced while the height of the casing of the battery remains unchanged. The height of the cell that may be accommodated in the inner portion of the casing is thereby increased, and the capacity of the battery and the electrical energy that may be provided the battery are raised.

Each embodiment or implementation in the specification is described in a progressive manner. Each embodiment focuses on its differences from other embodiments, and the same or similar parts among various embodiments may be referred to one another.

It shall be pointed out that phrases such as "in specific embodiments", "in some embodiments", "in this embodiment", and "exemplarily" mentioned in the specification indicate that the described embodiments may include specific features, structures, or characteristics, but not every embodiment necessarily includes such specific features, structures, or characteristics. Moreover, such phrases do not necessarily refer to the same embodiment. Further, when describing specific features, structures, or characteristics in together with the embodiments, implementing such features, structures, or characteristics in combination with other embodiments, whether explicitly or implicitly described, is within the knowledge of a person having ordinary skill in the art.

In general, terms shall be understood at least partially based on their contextual usage. For instance, at least partially according to the context, the term "one or more" used in the text may be used to describe any feature, structure, or characteristic in a singular sense, or may be used to describe a combination of features, structures, or characteristics in a plural sense. Similarly, at least partially according to the context, terms such as "a" or "the" may also be understood to convey singular usage or to convey plural usage.

It should be easily understood that "on", "above", and "over" in this disclosure shall be interpreted in the broadest way, so that "on" not only means "directly on something", but also includes the meaning of "on something" with intermediate features or layers in between, and "above" or "over" not only includes the meaning of "above" or "over something", but may also include the meaning of "above" or "over something" without intermediate features or layers in between (i.e., directly on something).

In addition, for ease of explanation, spatial relative terms may be used in the text, such as "below", "beneath", "lower", "above", "upper", etc., to describe the relationship of one element or feature to another element or feature as shown in the figures. The spatial relative terms are intended to encompass different orientations of the device in use or operation in addition to the orientation depicted in the figures. The device may have other orientations (rotated 90 degrees or at other orientations), and the spatial relative descriptive words used in the text may be interpreted accordingly.

### Reference Signs List

L1 , L2 , L3: distance
100: cap plate
110: first surface
120: second surface
130: first groove
140: second protrusion
141: protruding portion
142: transition portion
143: fifth surface
144: sixth surface
200: lower insulating member
210: third surface
220: fourth surface
230: first protrusion
240: second groove
241: accommodating region
250: first structure
260: second structure
270: first gap
300: electrode lead-out member
310: connecting plate
320: electrode terminal
330: second gap

## Claims

1. A battery cap, comprising:
a cap plate (100) comprising a first surface (110) and a second surface (120) opposite to each other in a thickness direction, wherein at least a partial region of the first surface (110) is provided with a first groove (130);
a lower insulating member (200) comprising a third surface (130) and a fourth surface (140) opposite to each other in a thickness direction, wherein at least a partial region of the third surface (130) is provided with a first protrusion (230), the third surface (210) is a side of the lower insulating member (200) close to the first surface (110), and the first protrusion (230) is accommodated in the first groove (130),
wherein a portion of the fourth surface (220) corresponding to the first protrusion (230) is provided with a second groove (240),
wherein in a first direction (X), a bottom portion of the second groove (240) is higher than a lowest position of the cap plate (100), and the first direction (X) is the direction from the fourth surface (220) towards the third surface (210); and
an electrode lead-out member (300) comprising a connecting plate (310) and an electrode terminal (320) connected to each other, wherein one end of the electrode terminal (320) facing away from the connecting plate (310) passes through the lower insulating member (200) and the cap plate (100) and extends to the second surface (120), and the connecting plate (310) is arranged in the second groove (240) and abuts against a bottom wall of the second groove (240).

2. The battery cap according to claim 1, wherein a protrusion height of the first protrusion (230) is less than or equal to a recessed depth of the first groove (130).

3. The battery cap according to claim 1 or 2, wherein a thickness of the lower insulating member (200) at the first protrusion (230) is less than or equal to a depth of the first groove (130).

4. The battery cap according to claim 3, wherein a thickness of the first protrusion (230) is less than the depth of the first groove (130), and one side of the first protrusion (230) close to the first surface (110) abuts against a bottom portion of the first groove (130).

5. The battery cap according to claim 1, wherein a portion of the second surface (120) corresponding to the first groove (130) is provided with a second protrusion (140), and
a thickness of the second protrusion (140) is equal to a thickness of the cap plate (100).

6. The battery cap according to claim 5, wherein in the thickness direction of the cap plate (100), a distance from an outer surface of the second protrusion (140) to the second surface (120) is a first distance (L1), and
a ratio of the first distance (L1) to the thickness of the cap plate (100) is greater than or equal to 0.1 and less than or equal to 0.8.

7. The battery cap according to claim 5, wherein the second protrusion (140) comprises:
a protruding portion (141); and
a transition portion (142), wherein one end of the transition portion (142) is connected to the second surface (120) of the cap plate (100), and the other end of the transition portion (142) is connected to the protruding portion (141),
the transition portion (142) is inclined towards the protruding portion (141) relative to the second surface (120).

8. The battery cap according to claim 7, wherein the transition portion (142) has a fifth surface (143) and a sixth surface (144) opposite to each other,
in a direction perpendicular to an inclined direction of the transition portion (142), a shortest distance from the fifth surface (143) to the sixth surface (144) is a second distance (L2), and
a ratio of the second distance (L2) to the thickness of the cap plate (100) is greater than or equal to 0.3 and less than or equal to 0.9.

9. The battery cap according to any one of claims 1 to 6, wherein an accommodating region (241) is provided between the connecting plate (310) and an opening of the second groove (240), the accommodating region (241) is configured to accommodate a folded tab on a cell, and a depth of the accommodating region (241) in the first direction (X) is at least twice a thickness of the folded tab.

10. The battery cap according to any one of claims 1 to 6, wherein the lower insulating member (200) comprises:
a first structure (250), being the first protrusion (230); and
a second structure (260) connected to an outer edge of the first protrusion (230), wherein the second structure (260) and the first structure (250) form the second groove (240),
a wall surface of the first structure (250) facing the connecting plate (310) is the bottom wall of the second groove (240).

11. The battery cap according to claim 10, wherein a maximum thickness of the second structure (260) in the first direction (X) is a third distance (L3), and the third distance (L3) is greater than or equal to 2 mm and less than or equal to 5 mm.

12. The battery cap according to claim 11, wherein a first gap (270) is provided between one end of the first structure (250) facing away from the connecting plate (310) and a side wall of the first groove (130).

13. The battery cap according to any one of claims 1 to 6, wherein a second gap (330) is provided between the connecting plate (310) and a side wall of the second groove (240).

14. A battery, comprising a cell and the battery cap according to any one of claims 1 to 13.
